# EUROPEAN PATENT APPLICATION

(11) **EP 2 506 042 A2**
(43) Date of publication of application: **03.10.2012**
(21) Application number: 10833508.4
(22) Date of filing: 15.11.2010
(51) Int. Cl.: G02B 5/20

(54) **DISPLAY FILTER, DISPLAY DEVICE COMPRISING SAME AND PRODUCTION METHOD FOR SAME**

(30) Priority: 24.11.2009 KR 20090113991
(71) Applicant: LG Electronics Inc., Seoul 150-721 (KR)
(72) Inventor: JU, Jun Hwan, Gumi-si Gyungbuk 730-360 (KR); KIM, Tae Yong, Gumi-si Gyungbuk 730-360 (KR)
(74) Representative: Frenkel, Matthias Alexander
(86) International application number: PCT/KR2010/008042
(87) International publication number: WO 2011/065696

(57) **Abstract**

Disclosed are a display filter, a display device comprising the filter and a production method for the filter. The disclosed display filter comprises a base section and a pattern section which is formed on the base section. The pattern section is formed from an adhesive material comprising metallic powder. The metallic powder is included at 10 - 30 parts by weight relative to the pattern section. Thus, bright room contrast can be improved by blocking light coming from outside, and electromagnetic waves generated from within a panel can be reduced.

## Description

### [Technical Field]

The present invention relates to a display filter, a display device including the same, and a production method of the same, and more particularly to a display filter having a pattern section formed at a base section, wherein the pattern section is formed of an adhesive material containing metallic powder, and the metallic powder is contained at 10 to 30 parts by weight with respect to the pattern section, a display device including the same, and a production method of the same.

### [Background Art]

As the modern society becomes a high information society, parts and equipment related to image display have been remarkably improved and popularized. Among such parts and equipment is a display device for displaying an image, the size of which has been greatly increased and, at the same time, the thickness of which has been greatly decreased.

A display device displays a predetermined image on a screen. Examples of the display device include a liquid crystal display (LCD), a field emission display (FED), an organic light emitting diode (OLED), and a plasma display panel (PDP).

In such a display device, however, external light is reflected by the front of a panel during realization of an image with the result that a bright room contrast may be reduced, and electromagnetic waves, which are harmful to humans, may be discharged from the panel.

### [Disclosure]

### [Technical Problem]

It is an object of the present invention to provide a display filter to absorb and block light coming from the outside and electromagnetic waves generated from the panel and a display device including the same.

### [Technical Solution]

A display filter according to the present invention includes a base section and a pattern section formed at the base section, wherein the pattern section is formed of an adhesive material containing metallic powder, and the metallic powder is contained at 10 to 30 parts by weight with respect to the pattern section.

The metallic powder may include depleted silver of 10 to 30 parts by weight with respect to the metallic powder and depleted aluminum of 70 to 90 parts by weight with respect to the metallic powder.

Also, a display device according to the present invention includes a panel and a display filter formed at a front of the panel, the display filter including a base section and a pattern section formed at the base section, wherein the pattern section is formed of an adhesive material containing metallic powder, and the metallic powder is contained at 10 to 30 parts by weight with respect to the pattern section.

Also, a production method of a display filter according to the present invention includes applying a filler to form a pattern section over a surface of a blanket cylinder having a plurality of depressions, removing the filler applied between the depressions, transferring the filler applied in the depressions to a substrate to form a pattern section, drying the pattern section applied to the substrate, and forming a base section on the substrate at which the pattern section is formed.

### [Advantageous Effects]

According to the present invention, the pattern section contains metallic powder, and therefore, it is possible to block light coming from the outside, thereby improving a bright room contrast, and, at the same time, to reduce electromagnetic waves generated from the interior of the panel.

### [Description of Drawings]

FIG. 1 is an exploded perspective view showing a plasma display device according to an embodiment of the present invention;
FIG. 2 is a sectional view showing a display filter according to an embodiment of the present invention;
FIGS. 3 to 6 are sectional views showing embodiments of the structure of the display filter to illustrate optical properties of the display filter based on the structure thereof;
FIGS. 7 and 8 are views showing an embodiment of pattern sections formed at the display filter according to the present invention;
FIGS. 9 and 10 are views showing an embodiment of the display filter according to the present invention;
FIG. 11 is a sectional view showing an embodiment of the structure of a filter according to the present invention; and
FIG. 12 is a view showing a production method of a display filter according to an embodiment of the present invention.

### [Best Mode]

Hereinafter, the present invention will be described in detail with reference to the accompanying drawings.

Also, a plasma display device will hereinafter be described as a display device according to the present invention for the convenience of description; however, the present invention is not limited thereto. Examples of the display device according to the present invention may include large-sized display devices, such as an organic light emitting diode (OLED), a liquid crystal display (LCD), and a field emission display (FED), and small-sized mobile display devices, such as a personal digital assistant (PDA), a small-sized game machine display window, and a mobile phone display window.

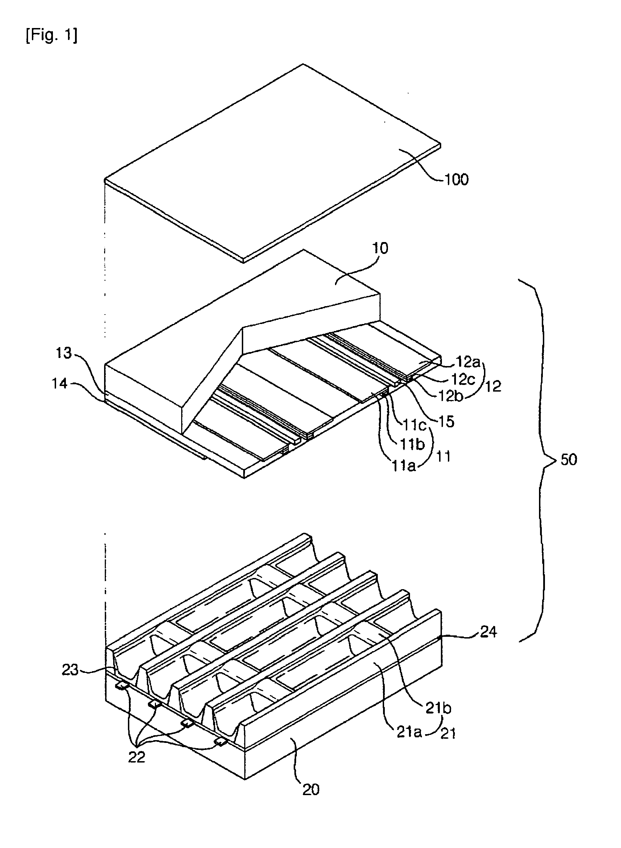

FIG. 1 is an exploded perspective view showing a plasma display device according to an embodiment of the present invention.

The plasma display device shown in FIG. 1 generally includes a display filter 100 and a plasma display panel 50.

The plasma display panel 50 includes a sustain electrode pair, i.e. a scan electrode 11 and a sustain electrode 12, formed on an upper substrate 10 and an address electrode 22 formed on a lower substrate 20.

The sustain electrode pair 11 and 12 respectively includes transparent electrodes 11a and 12a formed of indium tin oxide (ITO) and bus electrodes 11b and 12b. The bus electrodes 11b and 12b may be formed of a metal, such as silver (Ag) or chrome (Cr), a stack of chrome (Cr), copper (Cu), and chrome (Cr), or a stack of chrome (Cr), aluminum (Al), and chrome (Cr). The bus electrodes 11b and 12b are respectively formed on the transparent electrodes 11a and 12a to reduce voltage drop caused by the transparent electrodes 11a and 12a, which exhibit high resistance.

Although the sustain electrode pair 11 and 12 are configured in a structure in which the transparent electrodes 11a and 12a and the bus electrodes 11b and 12b are respectively stacked, the sustain electrode pair 11 and 12 may be constituted by only the bus electrodes 11b and 12b without the transparent electrodes 11a and 12a. This structure has an advantage in that the manufacturing cost of the panel can be reduced, as the transparent electrodes 11a and 12a are not used. The bus electrodes 11b and 12b used in this structure may be formed of various materials, such as a photosensitive material, in addition to the above-specified materials.

Between the transparent electrodes 11a and 12a and the bus electrodes 11b and 12b of the scan electrode 11 and the sustain electrode 12 is a black matrix (BM) 15 performing a light blocking function for absorbing external light generated at the outside of the upper substrate 10 to reduce reflection and a function for improving purity and contrast of the upper substrate 10.

The black matrix (BM) 15 is formed at the upper substrate 10. The black matrix (BM) 15 may include a first black matrix 15 formed at a region overlapping a partition wall 21 and second black matrices 11c and 12c respectively formed between the transparent electrodes 11a and 12a and the bus electrodes 11b and 12b. Here, the first black matrix 15 and the second black matrices 11c and 12c, which are also called black layers or black electrode layers, may be simultaneously formed so that the first black matrix 15 and the second black matrices 11c and 12c are physically connected to each other, or may not be simultaneously formed so that the first black matrix 15 and the second black matrices 11c and 12c are not physically connected to each other.

Also, in a case in which the first black matrix 15 and the second black matrices 11c and 12c are formed so that the first black matrix 15 and the second black matrices 11c and 12c are physically connected to each other, the first black matrix 15 and the second black matrices 11c and 12c may be formed of the same material. In a case in which the first black matrix 15 and the second black matrices 11c and 12c are formed so that the first black matrix 15 and the second black matrices 11c and 12c are not physically connected to each other, on the other hand, the first black matrix 15 and the second black matrices 11c and 12c may be formed of different materials.

An upper dielectric layer 13 and a passivation film 14 are stacked on the upper substrate 10, at which the scan electrode 11 and the sustain electrode 12 are formed side by side. Charged particles generated by discharge are accumulated in the upper dielectric layer 13. The upper dielectric layer 13 may function to protect the sustain electrode pair 11 and 12. The passivation film 14 protects the upper dielectric layer 13 from sputtering of charged particles generated during discharge of gas, and improves discharge efficiency of secondary electrons.

The address electrode 22 is formed in the direction in which the address electrode 22 intersects the scan electrode 11 and the sustain electrode 12. A lower dielectric layer 24 and a partition wall 21 are formed on the lower substrate 20, at which the address electrode 22 is formed.

Also, a fluorescent layer 23 is formed at the surfaces of the lower dielectric layer 24 and the partition wall 21. The partition wall 21 includes lengthwise partition walls 21a and breadthwise partition walls 21b forming a closed structure. The partition wall 21 physically partitions discharge cells, and prevents ultraviolet light and visible light generated by discharge from leaking to an adjacent discharge cell.

Although the partition wall 21 is configured to have the structure shown in FIG. 1, the partition wall 21 may be configured to have various structures. Although R, G, and B discharge cells are shown and described as being arranged on the same line, R, G, and B discharge cells may be arranged in other forms.

Also, the fluorescent layer 23 is excited by ultraviolet light generated during discharge of gas to generate visible light of red (R), green (G), or blue (B). An inert mixed gas, such as He and Xe, Ne + Xe, or He + Ne + Xe, is injected into a discharge space provided between the upper and lower substrate 10 and 20 and the partition wall 21.

Meanwhile, as shown in FIG. 1, the display filter 100 is preferably disposed at the front of the plasma display panel 50. The display filter according to the present invention, which will be described below, absorbs light incident upon the panel 50 from the outside so that the light is not reflected to an observer side, thereby improving a bright room contrast, and blocks harmful electromagnetic waves, generated from the panel 50. Also, an anti-reflection (AR)/near infrared (NIR) shielding layer may be further attached to the display filter 100.

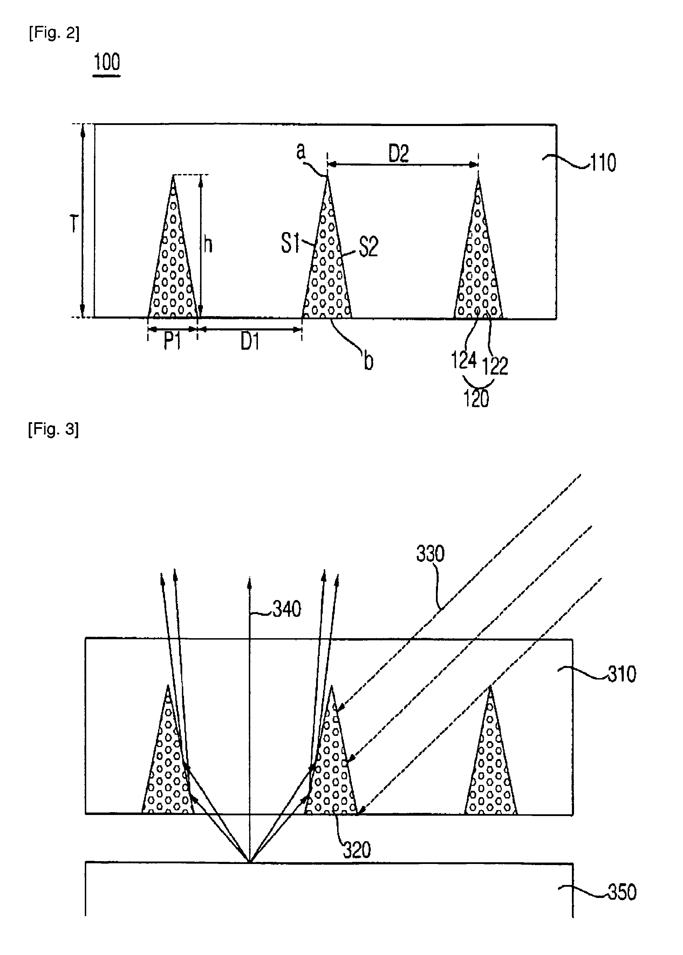

FIG. 2 is a sectional view showing a display filter according to an embodiment of the present invention.

Referring to FIG. 2, the display filter 100 may include a base section 110 and pattern sections 120 formed at the base section. Each of the pattern sections 120 may contain metallic powder 124.

First, the base section 110 may be formed of a transparent plastic material, which smoothly transmits light, e.g. a resin material formed by ultraviolet curing. In particular, the base section may be formed of a transparent adhesive material.

In a case in which the base section 110 is formed of a transparent adhesive material, an adhesive layer to adhere the substrate and the display filter 100 may be omitted when the display filter 100 is disposed on a substrate, such as glass, which will be described below.

When the base section has a thickness T of 20 *µ*m to 250 *µ*m, a production process of the base section is easily carried out, and the base section may have appropriate light transmissivity. Also, the thickness T of the display filter may be 100 *µ*m to 180 *µ*m to smoothly transmit light discharged from the panel, to refract light coming from the outside so that the light can be effectively absorbed and blocked by the pattern sections 120, and to secure solidity of a sheet.

The pattern sections 120, which may be formed at the base section 110 in a line, are preferably formed with a color darker than that of the base section 110 to improve an external light blocking effect. Also, each of the pattern sections may contain metallic powder 124 to shield electromagnetic interference (EMI).

Meanwhile, each of the pattern sections 120 may be formed of an adhesive material 122. In a case in which each of the pattern sections 120 is formed of an adhesive material 122, adhesive strength between each of the pattern sections 120 and the base section 110 is improved, thereby easily achieving formation of the pattern sections 120. Also, an adhesive layer to adhere the display filter 100 to the substrate may be omitted.

Also, each of the pattern sections 120 may contain metallic powder 124 with the result that an EMI shielding sheet for EMI shielding may not be provided. In a case in which the EMI shielding sheet is omitted as described above, a moiré phenomenon may be considerably reduced as compared with a case in which a conventional mesh type EMI shielding sheet is provided. That is, the moiré phenomenon is a phenomenon generated by regular repetition of a specific pattern, which deteriorates picture quality. In a case in which the EMI shielding sheet is omitted as in the present invention, the occurrence of a moiré phenomenon caused by overlap between the conventional mesh type EMI shielding sheet and the pattern sections 120 is prevented.

The metallic powder 124 for EMI shielding may include at least one selected from among silver (Ag) powder, copper (Cu) powder, aluminum (Al) powder, and iron (Fe) powder. In particular, the metallic powder preferably includes depleted silver (Ag) powder and depleted aluminum (Al) powder to improve an external light blocking effect. Depleted aluminum (Al) and depleted silver (Ag) have a black color. In a case in which each of the pattern sections 120 contains depleted silver (Ag) powder and depleted aluminum (Al) powder, therefore, it is possible to block external light, to shield EMI generated in the panel, and to prevent the occurrence of a moiré phenomenon.

Meanwhile, the metallic powder 124 contained in each of the pattern sections 120 is preferably contained at 10 to 30 parts by weight with respect to each of the pattern sections 120. If the metallic powder 124 is contained at less than 10 parts by weight with respect to the entirety of each of the pattern sections 120, which means that the amount of added metal powder 124 is too small, it is difficult to sufficiently achieve an external light blocking function and an EMI shielding effect. On the other hand, if the metallic powder 124 is contained at greater than 30 parts by weight with respect to the entirety of each of the pattern sections 120, an adhesive material is not uniformly distributed between particles of the metallic powder 124 with the result that it is difficult to maintain the form of each of the pattern sections 120.

The following table 1 shows experimental results of shape maintenance of each of the pattern sections 120 and an EMI shielding effect of each of the pattern sections 120 based on the amount of added metallic powder 124.

**[Table 1]**

| Amount of metallic powder (parts by weight) | Shape maintenance of each pattern section | EMI shielding |
|---|---|---|
| 5 | O | X |
| 8 | O | X |
| 10 | O | O |
| 15 | O | O |
| 20 | O | O |
| 25 | O | O |
| 30 | O | O |
| 32 | X | O |
| 35 | X | O |

Also, the metallic powder 124 contained in each of the pattern sections 120 preferably includes depleted silver (Ag) powder and depleted aluminum (Al) powder, as described above. At this time, the depleted silver (Ag) powder may be added at 10 to 30 parts by weight with respect to the entirety of metallic powder 124 contained in each of the pattern sections 120, and the depleted aluminum (Al) powder may be added at 70 to 90 parts by weight with respect to the entirety of metallic powder 124 contained in each of the pattern sections 120.

If the depleted silver (Ag) powder is added to the depleted aluminum (Al) powder at 10 parts by weight or more with respect to the metallic powder 124, an EMI shielding effect is greatly improved. On the other hand, if the depleted silver (Ag) powder is added to the depleted aluminum (Al) powder at greater than 30 parts by weight with respect to the metallic powder 124, an improvement ratio of the EMI shielding effect is reduced. Preferably, therefore, silver (Ag) powder is added at 10 to 30 parts by weight with respect to the entirety of the metallic powder 124 in consideration of production cost.

Meanwhile, each of the pattern sections 120 includes an upper end a and a lower end b having a width greater than that of the upper end a. Also, each of the pattern sections 120 includes a first surface S1 and a second surface S2, which are connected to the lower end b.

That is, each of the pattern sections 120 may have a triangular shape, preferably an isosceles triangular shape, in section. In addition, each of the pattern sections 120 may have various shapes, such as a trapezoidal shape.

Referring to FIG. 2, each of the pattern sections 120 may have a lower end width P1 of 18 *µ*m to 36 *µ*m. In this case, it is possible to secure an opening ratio at which light generated from the panel is smoothly discharged to a user side and to maximize external light blocking efficiency.

Also, each of the pattern sections 120 may have a height h of 80 *µ*m to 170 *µ*m. In this case, it is possible to define an inclination of an inclined plane at which absorption of external light and reflection of panel light are effectively achieved in a relationship with the lower end width P1 and to prevent the occurrence of a short circuit between the pattern sections 120.

The following table 2 shows experimental results of insulation breakdown and external light blocking effects of the display filter based on the thickness T of the base section 110 and the height h of each of the pattern sections 120. As described above, the thickness T of the base section 110 may be 20 *µ*m to 250 *µ*m, preferably 100 *µ*m to 180 *µ*m. The following table shows experimental results of effects when the thickness T of the base section 110 is 120 *µ*m.

**[Table 2]**

| Thickness (T) of base section | Height (h) of each pattern section | Insulation breakdown | External light blocking |
|---|---|---|---|
| 120 *µ*m | 120 *µ*m | O | O |
| 120 *µ*m | 115 *µ*m | Δ | O |
| 120 *µ*m | 110 *µ*m | X | O |
| 120 *µ*m | 105 *µ*m | X | O |
| 120 *µ*m | 100 *µ*m | X | O |
| 120 *µ*m | 95 *µ*m | X | O |
| 120 *µ*m | 90 *µ*m | X | O |
| 120 *µ*m | 85 *µ*m | X | Δ |
| 120 *µ*m | 80 *µ*m | X | Δ |
| 120 *µ*m | 75 *µ*m | X | Δ |
| 120 *µ*m | 70 *µ*m | X | Δ |
| 120 *µ*m | 65 *µ*m | X | Δ |
| 120 *µ*m | 60 *µ*m | X | Δ |
| 120 *µ*m | 55 *µ*m | X | Δ |
| 120 *µ*m | 50 *µ*m | X | X |

Referring to Table 2, in a case in which the thickness T of the base section 110 is 120 *µ*m, and the height h of each of the pattern sections is 85 *µ*m or less, the external light blocking efficiency of each of the pattern sections 120 may be reduced. In a case in which the height h of each of the pattern sections is 60 *µ*m or less, external light may be incident upon the panel.

On the one hand, in a case in which the height h of each of the pattern sections is 115 *µ*m or more, the insulation of each of the pattern sections 120 may fail with the result that a product defect rate may be increased. On the other hand, in a case in which the height h of each of the pattern sections 120 is 115 *µ*m or less, there is no possibility of the insulation of each of the pattern sections 120 failing with the result that a defect rate of the display filter may be decreased. Consequently, when the height h of each of the pattern sections 120 is 90 *µ*m to 110 *µ*m, it is possible to increase external light blocking efficiency of the display filter and, at the same time, to decrease a defect rate of the display filter.

Also, when the thickness T of the base section 110 is 1.01 times to 2.25 times the height h of each of the pattern sections 120, it is possible to prevent insulation breakdown of the upper end a of each of the pattern sections and to prevent incidence of external light upon the panel. Also, the thickness T of the base section 110 may be 1.01 times to 1.5 times the height h of each of the pattern sections 120 so as to prevent insulation breakdown and incidence of external light upon the panel and, at the same time, to increase the reflection amount of light discharged from the panel and to secure a viewing angle.

Referring back to FIG. 2, the distance D1 between two adjacent pattern sections may be 40 *µ*m to 90 *µ*m, and the distance D2 between the upper ends of the adjacent pattern sections may be 90 *µ*m to 130 *µ*m, so as to secure an inclination of the inclined plane of each of the pattern sections 120 necessary to secure an opening rate at which panel light is discharged to a user side to display an image with appropriate brightness and to improve an external light blocking effect and panel light reflection efficiency.

For the above reasons, it is possible to secure an opening rate for display when the distance D1 between two adjacent pattern sections is 1.1 times to 5 times the lower end width of each of the pattern sections 120. Also, the distance D1 between two adjacent pattern sections may be 1.15 times to 3.5 times the lower end width of each of the pattern sections 120 so as to secure an opening rate and, at the same time, to optimize an external light blocking effect and panel light reflection efficiency.

In a case in which the height h of each of the pattern sections 120 is 0.89 times to 4.25 times the distance D1 between two adjacent pattern sections, it is possible to prevent external light coming obliquely from above from being incident upon the panel. Also, the height h of each of the pattern sections 120 may be 1.5 times to 3 times the distance D1 between two adjacent pattern sections so as to prevent the occurrence of a short circuit between the pattern sections 120 and to optimize reflection efficiency of panel light.

Also, when the distance D2 between the upper ends of two adjacent pattern sections is 1 to 3.25 times the distance D1 between the lower ends of the two adjacent patterns, it is possible to secure an opening rate necessary to display an image with appropriate brightness. Also, the distance D2 between the upper ends of two adjacent pattern sections may be 1.2 times to 2.5 times the distance D1 between the lower ends of the two adjacent patterns so as to optimize reflection efficiency at which panel light is totally reflected by the inclined plane of each of the pattern sections 120.

FIGS. 3 to 6 are sectional views showing embodiments of the structure of the display filter to illustrate optical properties of the display filter based on the structure thereof.

FIG. 3 shows a case in which the index of refraction of each pattern section 320 is less than that of a base section 310 so as to absorb and block external light 330 and to totally reflect visible light discharged from a panel 350, thereby increasing reflectance of each of the pattern sections 320.

The external light 330, which lowers a bright room contrast of the plasma display panel, is frequently located at the upper side of the panel 350. Referring to FIG. 3, the external light 330 obliquely incident upon the display filter is refracted and absorbed into the interior of each of the pattern sections, having a reflectance less than that of a base section 310, according to Snell's law. The external light refracted into the interior of each of the pattern sections 320 may be absorbed by metallic powder.

Also, light 340 discharged from the panel 350 to the outside for display is totally reflected by an inclined plane of each of the pattern sections 320 and is reflected to the outside, i.e. an observer side.

The reason that the external light 330 is refracted and absorbed by each of the pattern sections 320, and the light 340 discharged from the panel 350 is totally reflected by each of the pattern sections 320, as described above is that the angle between the external light 330 and the inclined plane of each of the pattern sections 320 is greater than the angle between the panel light 340 and the inclined plane of each of the pattern sections 320 as shown in FIG. 3.

Consequently, the display filter according to the present invention absorbs external light 330 so that the external light cannot be reflected to the observer side and increases the reflection amount of the light 340 discharged from the panel 350 to improve a bright room contrast of a display image.

Preferably, the index of refraction of each of the pattern sections 320 is 0.3 times or more and less than 1 times that of the base section 310 so as to maximize absorption of the external light 330 and total reflection of the light from the panel 350 in consideration of the angle of the external light 330 incident upon the panel 350. Preferably, the index of refraction of each of the pattern sections 320 is 0.3 times to 0.8 times that of the base section 310 so as to maximize total reflection of the light 340 discharged from the panel 350 by the inclined plane of each of the pattern sections 320 in consideration of a vertical viewing angle of the plasma display panel.

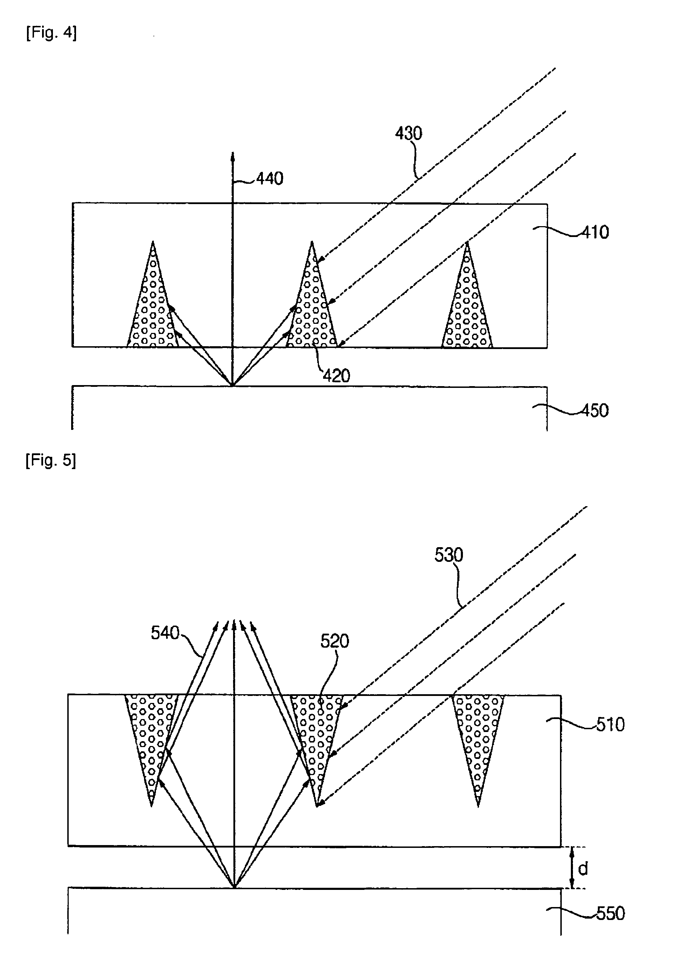

FIG. 4 shows a case in which the index of refraction of each pattern section 420 is greater than that of a base section 410. Referring to FIG. 4, both external light 430 incident upon each of the pattern sections 420 and panel light 440 are absorbed by each of the pattern sections 420 according to Snell's law, as the index of refraction of each of the pattern sections 420 is greater than that of the base section 410. Consequently, it is possible to reduce a ghost phenomenon.

On the other hand, in a case in which the index of refraction of each of the pattern sections 420 is greater than that of the base section 410, transmissivity of the display filter and a bright room contrast may be reduced. Consequently, the difference between the index of refraction of each of the pattern sections 420 and the index of refraction of the base section 410 is preferably 0.05 to 0.3 so as to prevent the occurrence of a ghost phenomenon and, at the same time, to prevent great decrease in transmissivity of the display filter. Also, the index of refraction of each of the pattern sections 420 is preferably 1.0 to 1.3 times that of the base section 410 so as to prevent the occurrence of a ghost phenomenon and, at the same time, to maintain a bright room contrast of the panel at an appropriate level.

FIG. 5 shows a case in which the lower end b of each pattern section 520 is disposed at an observer side, and the index of refraction of each of the pattern sections 520 is less than that of a base section 510. As shown in FIG. 5, the lower end b of each of the pattern sections 520 is disposed at the observer side, upon which external light 530 is incident, so that the external light 530 can be absorbed by the lower end b of each of the pattern sections 520, thereby improving an external light blocking effect.

Also, it is possible to improve an opening rate of the display filter, as the distance between the lower ends b of the pattern sections 520 is greater than in the case shown in FIG. 4.

As shown in FIG. 5, panel light 540 discharged from a panel 550 may be reflected by an inclined plane of each of the pattern sections 520 and may gather around the panel light 540 having passed through the base section 510. As a result, it is possible to reduce a ghost phenomenon without great decrease in transmissivity of the display filter.

As the panel light 540 is reflected by the inclined plane of each of the pattern sections 520 and gathers around the panel light 540 having passed through the base section 510, the distance d between the panel 550 and the display filter is preferably 1.5 to 3.5 mm so as to prevent the occurrence of the ghost phenomenon.

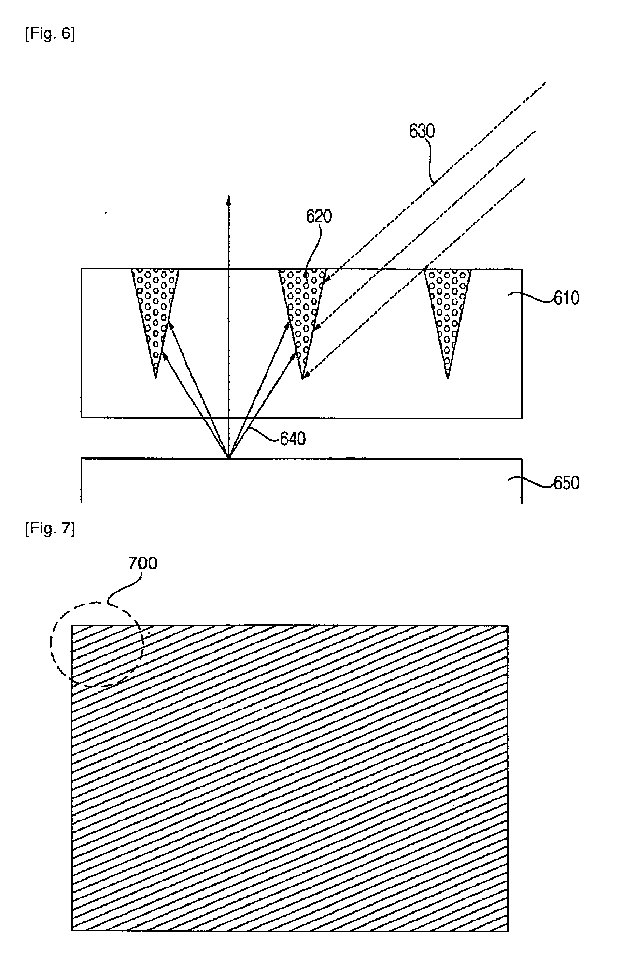

FIG. 6 shows a case in which the lower end b of each pattern section 620 is disposed at an observer side, and the index of refraction of each of the pattern sections 620 is greater than that of a base section 610. As shown in FIG. 6, panel light 640 incident upon an inclined plane of each of the pattern sections 620 may be absorbed by each of the pattern sections 620, as the index of refraction of each of the pattern sections 620 is greater than that of the base section 610. Consequently, an image is displayed by the panel light 640 having passed through the base section 610, and therefore, it is possible to reduce a ghost phenomenon.

Also, it is possible to improve an external light absorption effect, as the index of refraction of each of the pattern sections 620 is greater than that of the base section 610.

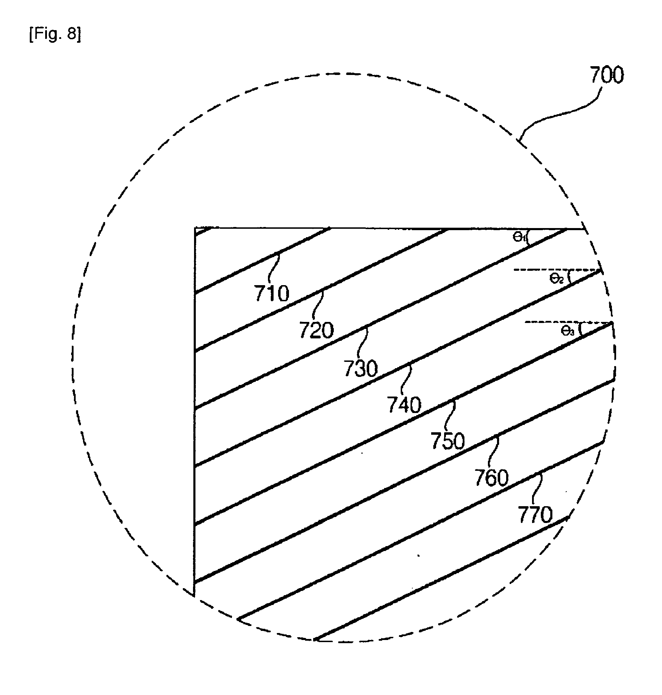

FIGS. 7 and 8 are views showing an embodiment of pattern sections formed at the display filter according to the present invention. As shown, the pattern sections are preferably formed on a base section in a line. The pattern sections are obliquely formed in a state in which each of the pattern sections has a predetermined angle with respect to the upper end or the lower end of the display filter.

As shown in FIG. 7, the pattern sections are obliquely formed to prevent the occurrence of a moiré phenomenon caused by a black matrix and a black layer in the panel.

Meanwhile, it is possible to prevent the occurrence of a moiré phenomenon and, at the same time, to most effectively block external light when the angle between each of the pattern sections and the upper end of the display filter is 20 degrees to 60 degrees in consideration of the fact that external light incident upon the panel is generally located at the upper end of the head of a user.

FIG. 8 is an enlarged view showing a portion of the display filter shown in FIG. 7. Pattern sections 710 to 770, which are formed in a line, are preferably arranged in parallel to each other. Even in a case in which the pattern sections are not arranged in parallel to each other, angles between the pattern sections 710 to 770 and the upper end of the display filter are preferably within the above-defined range. For example, angles θ₁, θ₂, and θ₃ between the patterns 730, 740, and 750 and the upper end of the display filter may be different from each other.

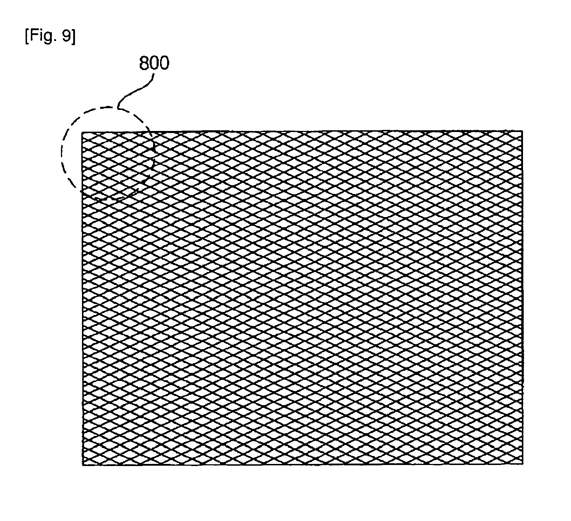

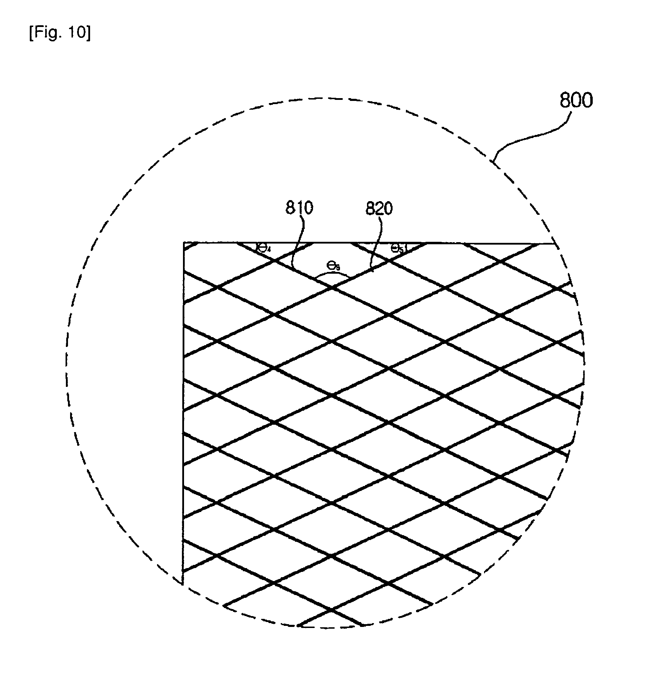

FIGS. 9 and 10 are views showing an embodiment of the display filter according to the present invention. First pattern sections 820 formed from the right side upper end to the left side lower end of the display filter intersect second pattern sections 810 formed from the left side upper end to the right side lower end of the display filter.

Each of the first pattern sections 820 forms an angle θ₅ with the upper end of the display filter, and each of the second pattern sections 810 forms an angle θ₄ with the upper end of the display filter. Also, the first pattern sections 820 and the second pattern sections 810 are formed in a state in which an angle θ₈ is formed between each of the first pattern sections 820 and each of the second pattern sections 810 to prevent the occurrence of a moiré phenomenon.

Also, the angle θ₅ between each of the first pattern sections 820 and the upper end of the display filter and the angle θ₄ and between each of the second pattern sections 810 and the upper end of the display filter are preferably 20 degrees to 60 degrees so as to prevent the occurrence of a moire phenomenon and, at the same time, to most effectively block external light. The angle θ₈ between each of the first pattern sections 820 and each of the second pattern sections 810 may be 70 degrees to 118 degrees.

In a case in which the first pattern sections 820 and the second pattern sections 810 are formed so that the first pattern sections 820 and the second pattern sections 810 intersect each other as described above, it is possible to more effectively block external light and, in addition, to shield EMI.

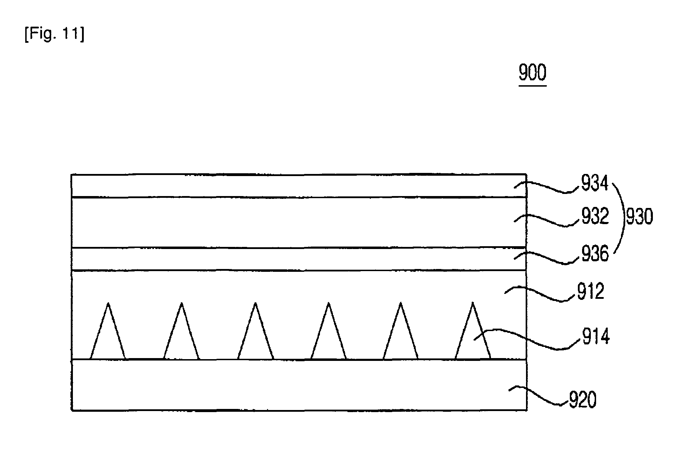

FIG. 11 is a sectional view showing an embodiment of the structure of a filter according to the present invention. A display filter 900 may further include an anti-reflection (AR)/near infrared (NIR) sheet 930.

The AR/NIR sheet 930 is configured to have a structure in which an anti-reflection (AR) layer 934 for preventing reflection of light coming from the outside to reduce a glare phenomenon is attached to the front of a base sheet 932, formed of a transparent plastic material, and a near infrared (NIR) shielding sheet 936 for shielding near infrared light emitted from a panel so that signals using infrared light as in a remote control can be normally transmitted is attached to the rear of the base sheet 932.

Meanwhile, according to the present invention, a base section 912 is formed of a transparent adhesive material, and therefore, an additional adhesive layer used to attach the AR/NIR sheet 930 is not necessary as shown in FIG. 11. Also, as will be described below, pattern sections 914 and the base section 912 are formed on a substrate 920 without an additional adhesive layer, and therefore, it is possible to produce a thinner display filter.

Also, although not shown in the drawing, the display filter 900 according to the present invention may further include a diffusion sheet. The diffusion sheet serves to diffuse incident light so that luminosity of the light is uniformly maintained. Consequently, the diffusion sheet uniformly diffuses light discharged from the panel to widen a vertical viewing angle of a display image and to hide patterns of the pattern sections 914. Also, the diffusion sheet condenses light in a direction corresponding to the vertical viewing angle to uniformalize front brightness and, at the same time, improve front brightness and to improve antistatic efficiency.

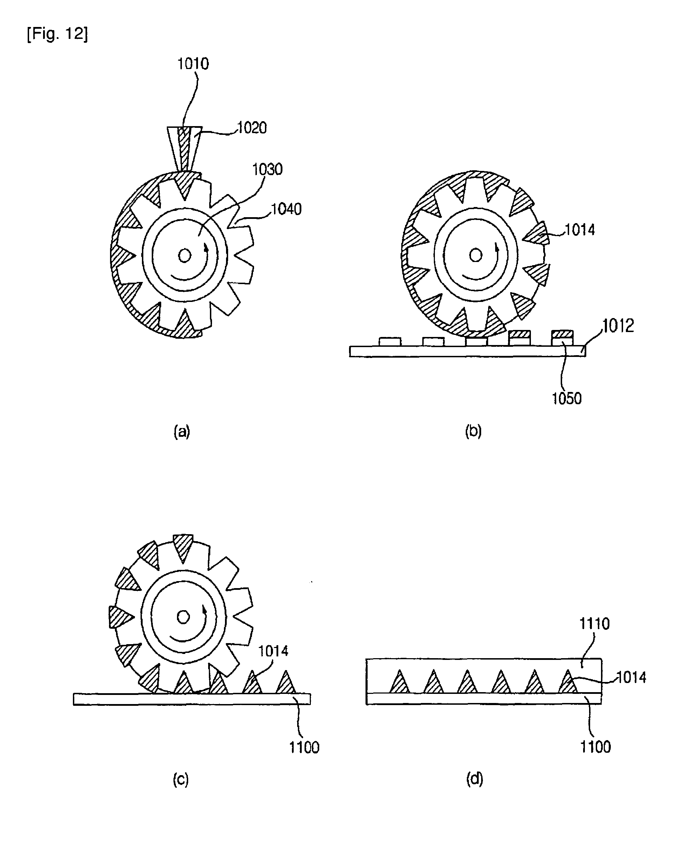

FIG. 12 is a view showing a production method of a display filter according to an embodiment of the present invention.

A production method of a display filter will be described with reference to FIG. 12. First, as shown in FIG. 12(a), a filler 1010 to form pattern sections 1014 is applied over the surface of a blanket cylinder 1030 having a plurality of depressions 1040.

Each of the depressions 1040 is formed in a shape corresponding to each of the pattern sections 1014 to be formed. The surface of the blanket cylinder 1030 is preferably silicon rubber.

Also, the filler 1010 has depleted metal powder mixed with an adhesive material. Preferably, the metallic powder is preferably contained at 10 to 30 parts by weight with respect to the filler 1010 so as to improve an external light blocking effect and an EMI shielding effect. Also, the metallic powder may include depleted silver of 10 to 30 parts by weight with respect to the metallic power and depleted aluminum of 70 to 90 parts by weight with respect to the metallic power.

Subsequently, the filler 1010 applied between the depressions 1040 is removed. The filler 1010 is removed as follows. As shown in FIG. 12(b), the blanket cylinder 1030 is brought into contact with a second substrate 1012 having a resist 1050 so as to correspond to positions between the depressions 1040, and the second substrate 1012 is moved while the blanket cylinder 1030 is rotated, or the blanket cylinder 1030 is moved, to remove the filler 1010 applied between the depressions 1040. As a result, only the filler corresponding to the shapes of the pattern sections 1014 to be formed is left in the depressions 1040 of the blanket cylinder 1030.

Subsequently, as shown in FIG. 12(c), the blanket cylinder 1030 is brought into contact with a substrate 1100 at which the pattern sections 1014 are to be formed, and the substrate 1000 is moved while the blanket cylinder 1030 is rotated, or the blanket cylinder 1030 is moved, to transfer the filler left in the depressions 1040 corresponding to the shapes of the pattern sections 1014 to the substrate 1100, and then the formed pattern sections 1014 are dried.

Subsequently, as shown in FIG. 12(d), a base section 1110 is formed on the substrate 1100, at which the pattern sections 1014 are formed. At this time, the base section 1110 is preferably formed of a transparent adhesive material. In a case in which the base section 1110 is formed of a transparent adhesive material as described above, an additional adhesive layer is not necessary even when the AR/NIR sheet 930 is further attached as shown in FIG. 11.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Consequently, possible modifications of the present invention fall within technology of the present invention.

## Claims

1. A display filter comprising:
a base section; and
a pattern section formed at the base section, wherein
the pattern section is formed of an adhesive material containing metallic powder, and the metallic powder is contained at 10 to 30 parts by weight with respect to the pattern section.

2. The display filter according to claim 1, wherein the metallic powder comprises depleted silver of 10 to 30 parts by weight with respect to the metallic powder and depleted aluminum of 70 to 90 parts by weight with respect to the metallic powder.

3. The display filter according to claim 1, wherein the base section is formed of a transparent adhesive material.

4. The display filter according to claim 1, wherein the base section has a thickness of 20 *µ*m to 250 *µ*m.

5. The display filter according to claim 1, wherein the base section has a thickness equivalent to 1.01 times to 2.25 times a height of the pattern section.

6. The display filter according to claim 1, wherein an angle between the pattern section and an upper end or a lower end of the filter is 20 degrees to 60 degrees.

7. The display filter according to claim 1, further comprising a second pattern section formed so as to intersect the pattern section.

8. The display filter according to claim 7, wherein an angle between the pattern section and the second pattern section is 70 degrees to 118 degrees.

9. A display device comprising:
a panel; and
a display filter formed at a front of the panel, the display filter comprising:
a base section; and
a pattern section formed at the base section, wherein the pattern section is formed of an adhesive material containing metallic powder, and the metallic powder is contained at 10 to 30 parts by weight with respect to the pattern section.

10. The display device according to claim 9, wherein the metallic powder comprises depleted silver of 10 to 30 parts by weight with respect to the metallic powder and depleted aluminum of 70 to 90 parts by weight with respect to the metallic powder.

11. The display device according to claim 9, wherein the base section is formed of a transparent adhesive material.

12. The display device according to claim 9, wherein an angle between the pattern section and an upper end or a lower end of the filter is 20 degrees to 60 degrees.

13. The display device according to claim 9, wherein the display filter further comprises a second pattern section formed so as to intersect the pattern section.

14. The display device according to claim 13, wherein an angle between the pattern section and the second pattern section is 70 degrees to 118 degrees.

15. The display device according to claim 9, wherein
the pattern section has a sectional shape in which a width of a lower end of the pattern section is greater than that of an upper end of the pattern section.

16. The display device according to claim 9, wherein the base section has a thickness of 20 *µ*m to 250 *µ*m.

17. The display device according to claim 9, wherein the base section has a thickness equivalent to 1.01 times to 2.25 times a height of the pattern section.

18. The display device according to claim 9, wherein the display filter further comprises an AR/NIR layer to prevent reflection of external light.

19. A production method of a display filter comprising:
applying a filler to form a pattern section over a surface of a blanket cylinder having a plurality of depressions;
removing the filler applied between the depressions;
transferring the filler applied in the depressions to a substrate to form a pattern section;
drying the pattern section applied to the substrate; and
forming a base section on the substrate at which the pattern section is formed.

20. The production method according to claim 19, wherein the filler is formed of an adhesive material containing metallic powder, and the metallic powder is contained at 10 to 30 parts by weight with respect to the filler.

21. The production method according to claim 20, wherein the metallic powder comprises depleted silver of 10 to 30 parts by weight with respect to the metallic powder and depleted aluminum of 70 to 90 parts by weight with respect to the metallic powder.

22. The production method according to claim 19, wherein the step of removing the filler comprises bringing the blanket cylinder into contact with a second substrate having a resist so as to correspond to positions between the depressions and moving the second substrate to remove the filler applied between the depressions.

23. The production method according to claim 19, wherein the base section is formed by applying and drying a transparent adhesive material.
